(19) Europäisches Patentamt
European Patent Office
Office européen des brevets

(11) **EP 3 431 509 A1**

(12) **EUROPEAN PATENT APPLICATION**
published in accordance with Art. 153(4) EPC

(43) Date of publication:
**23.01.2019 Bulletin 2019/04**

(21) Application number: **16894263.9**

(22) Date of filing: **15.03.2016**

(51) Int Cl.:
***C08B 3/06*** (2006.01)

(86) International application number:
**PCT/JP2016/001481**

(87) International publication number:
**WO 2017/158639 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Daicel Corporation**
**Osaka-shi, Osaka 530-0011 (JP)**

(72) Inventors:
• **MATSUMURA, Hiroyuki**
**(JP)**
• **TAKAHASHI, Keita**
**(JP)**

(74) Representative: **Grünecker Patent- und Rechtsanwälte**
**PartG mbB**
**Leopoldstraße 4**
**80802 München (DE)**

(54) **CELLULOSE ACETATE**

(57)    Disclosed herein is cellulose acetate that has excellent heat stability under wet conditions and is capable of reducing the occurrence of end-breakage in a spinning process.

Cellulose acetate satisfying the following formula (1):

$$[Mg/H_2SO_4] > 0, [Ca/H_2SO_4] > 0,$$

and

$$2.70 - [Mg/H_2SO_4])/1.62 \leq [Ca/H_2SO_4] \leq (37.7 - [Mg/H_2SO_4])/10.3 \qquad (1),$$

where the formula (1) represents a relationship between a chemical equivalent ratio of calcium content to residual sulfuric acid content $[Ca/H_2SO_4]$ and a chemical equivalent ratio of magnesium content to residual sulfuric acid content $[Mg/H_2SO_4]$.

EP 3 431 509 A1

**Description**

**Technical Field**

The present invention relates to cellulose acetate.

**Background Art**

Cellulose triacetate, which is a type of cellulose acetate, has high optical isotropy, high toughness, and high flame resistance, and is therefore used as various photographic materials and optical films. Further, cellulose diacetate is used as cellulose acetate fibers for tobacco filters etc. Cellulose acetate fibers can generally be produced by dry spinning in which a spinning solution obtained by dissolving cellulose acetate in a solvent that can dissolve cellulose acetate is extruded through a spinneret to form fibers, and then the solvent is evaporated by hot air to solidify the fibers. Particularly, cellulose acetate fibers having a small fiber diameter, such as those to be used for tobacco filters, are formed by extrusion through a spinneret whose hole diameter is small, and therefore end-breakage is likely to occur in a spinning process.

In order to prevent such end-breakage in a spinning process, Patent Literature 1 discloses that the amount of an alkaline-earth metal salt of hemicellulose acetate contained in a spinning solution for producing cellulose acetate fibers is reduced to 0.15 wt% or less, and Patent Literature 2 discloses that an organic acid with two or more carboxyl groups and/or a salt of the organic acid are/is added to a solution obtained by dissolving a cellulose ester in an organic solvent.

**Citation List**

**Patent Literature**

PTL 1: JP H10-298823 A
PTL 2: JP H2-251607 A

**Summary of Invention**

**Technical Problem**

All the cellulose acetates disclosed in PTL 1 have a problem that they have poor heat stability under wet conditions due to their low calcium content. The technique disclosed in PTL 2 also has a drawback that the organic acid with two or more carboxyl groups (e.g., citric acid) added to the solution is poorly soluble in the solvent. Therefore, when such an organic acid is added to a cellulose acetate solution, the organic acid or a salt thereof is precipitated, which leads to the clogging of a spinning nozzle and causes end-breakage. Further, the organic acid contains many carboxyl groups, and therefore tends to acidify the solution. This causes a problem that when the organic acid is added to a cellulose acetate solution, the cellulose acetate solution becomes unstable due to the deacetylation of cellulose acetate so that the cellulose acetate has poor heat stability under wet conditions.

It is an object of the present invention to provide cellulose acetate that has excellent heat stability under wet conditions and is capable of reducing the occurrence of end-breakage in a spinning process.

**Solution to Problem**

A first aspect of the present invention relates to cellulose acetate satisfying the following formula (1):

$$[Mg/H_2SO_4] > 0, [Ca/H_2SO_4] > 0,$$

and

$$(2.70 - [Mg/H_2SO_4])/1.62 \leq [Ca/H_2SO_4] \leq (37.7 - [Mg/H_2SO_4])/10.3 \qquad (1),$$

where the formula (1) represents a relationship between a chemical equivalent ratio of calcium content to residual sulfuric acid content $[Ca/H_2SO_4]$ and a chemical equivalent ratio of magnesium content to residual sulfuric acid content

[Mg/H$_2$SO$_4$].

It is preferred that the chemical equivalent ratio of calcium content to residual sulfuric acid content [Ca/H$_2$SO$_4$] and the chemical equivalent ratio of magnesium content to residual sulfuric acid content [Mg/H$_2$SO$_4$] satisfy a relationship represented by the following formula (2) and that an acetylation degree of the cellulose acetate is 54.0% or more but 56.0% or less:

$$[Ca/H_2SO_4] > 0, [Mg/H_2SO_4] > 0,$$

and

$$[Mg/H_2SO_4] \geq (-1.78)[Ca/H_2SO_4] + 4.10 \qquad (2).$$

It is preferred that the chemical equivalent ratio of calcium content to residual sulfuric acid content [Ca/H$_2$SO$_4$] and the chemical equivalent ratio of magnesium content to residual sulfuric acid content [Mg/H$_2$SO$_4$] satisfy a relationship represented by the following formula (3):

$$[Ca/H_2SO_4] > 0, [Mg/H_2SO_4] > 0,$$

and

$$[Mg/H_2SO_4] \leq (-9.59)[Ca/H_2SO_4] + 29.8 \qquad (3).$$

**Advantageous Effects of Invention**

According to the present invention, it is possible to provide cellulose acetate that has excellent heat stability under wet conditions and is capable of reducing the occurrence of end-breakage in a spinning process.

**Brief Description of Drawings**

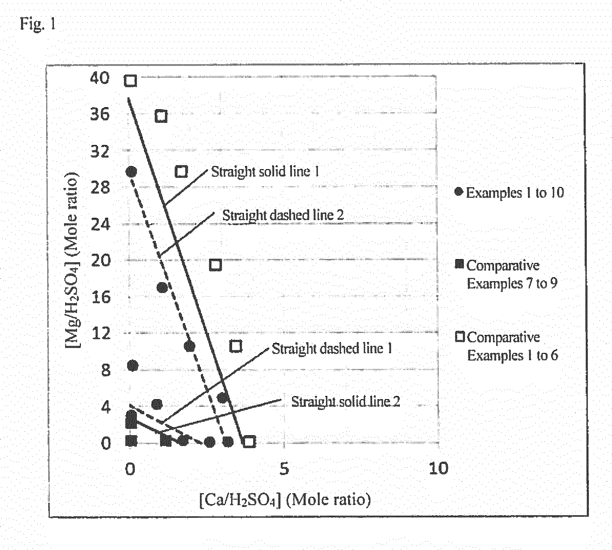

FIG. 1 is a plot of the relationships between a chemical equivalent ratio of calcium content to residual sulfuric acid content [Ca/H$_2$SO$_4$] and a chemical equivalent ratio of magnesium content to residual sulfuric acid content [Mg/H$_2$SO$_4$] of Examples and Comparative Examples.

**Description of Embodiments**

Hereinafter, a preferred embodiment of the present invention will be specifically described.

Cellulose acetate according to the present invention has a chemical equivalent ratio of calcium content to residual sulfuric acid content [Ca/H$_2$SO$_4$] and a chemical equivalent ratio of magnesium content to residual sulfuric acid content [Mg/H$_2$SO$_4$] which satisfy a relationship represented by the following formula (1):

$$[Mg/H_2SO_4] > 0, [Ca/H_2SO_4]] > 0,$$

and

$$(2.70 - [Mg/H_2SO_4])/1.62 \leq [Ca/H_2SO_4] \leq (37.7 - [Mg/H_2SO_4])/10.3 \qquad (1).$$

[Chemical equivalent ratio of calcium or magnesium to residual sulfuric acid content]

The chemical equivalent ratio of calcium content to residual sulfuric acid content [Ca/H$_2$SO$_4$] is obtained by measuring a calcium content (unit: mol) and a residual sulfuric acid content (unit: mol) and dividing the calcium content by the residual sulfuric acid content. The same applies to the chemical equivalent ratio of magnesium content to residual sulfuric acid content [Mg/H$_2$SO$_4$].

The term "residual sulfuric acid" used herein includes combined sulfuric acid, free sulfuric acid, and sulfuric acid, which corresponds to a sulfate salt neutralized by adding a base, in the cellulose acetate. The combined sulfuric acid refers to sulfuric acid bound to the cellulose acetate (a combined sulfuric acid component bound as a sulfate group of a sulfate ester or the like or as a sulfonate group). It is to be noted that when the cellulose acetate is washed, there is a case where the amounts of free sulfuric acid and a sulfate salt as the residual sulfuric acid are reduced, and therefore most of the residual sulfuric acid is combined sulfuric acid.

As described above, the cellulose acetate according to the present invention has a chemical equivalent ratio of calcium content to residual sulfuric acid content $[Ca/H_2SO_4]$ and a chemical equivalent ratio of magnesium content to residual sulfuric acid content $[Mg/H_2SO_4]$ which satisfy a relationship represented by the following formula (1), and therefore has excellent heat stability under wet conditions and is capable of reducing the occurrence of end-breakage in a spinning process. When $[Mg/H_2SO_4]$ and $[Ca/H_2SO_4]$ are equal to or less than certain values, precipitation of a substance that causes end-breakage is prevented, and therefore end-breakage is improved. However, if $[Mg/H_2SO_4]$ and $[Ca/H_2SO_4]$ are too low, the amount of $H_2SO_4$ with respect to the amount of Ca or Mg in the cellulose acetate is large, and therefore the cellulose acetate cannot maintain its heat stability under wet conditions. For this reason, it is important for $[Mg/H_2SO_4]$ and $[Ca/H_2SO_4]$ to satisfy a relationship represented by the following formula (1):

$$[Mg/H_2SO_4] > 0, \ [Ca/H_2SO_4] > 0,$$

and

$$(2.70 - [Mg/H_2SO_4])/1.62 \leq [Ca/H_2SO_4] \leq (37.7 - [Mg/H_2SO_4])/10.3 \qquad (1).$$

The relationship represented by the above formula (1) will be described with reference to the graph shown in FIG. 1. A region satisfying the relationship represented by the above formula (1) is a region where $[Mg/H_2SO_4]$ and $[Ca/H_2SO_4]$ are both positive, which is composed of a straight solid line 1 passing through 37.7 on the axis of $[Mg/H_2SO_4]$ and 3.67 on the axis of $[Ca/H_2SO_4]$, a straight solid line 2 passing through 2.70 on the axis of $[Mg/H_2SO_4]$ and 1.67 on the axis of $[Ca/H_2SO_4]$, and an area between the straight solid line 1 and the straight solid line 2.

A mechanism by which end-breakage occurs will be described. Glucuronoxylan in xylan that is a hemicellulose component contained in pulp (especially, wood pulp) used as a raw material of cellulose acetate or glucuronoxylan oxidized in the course of pulp purification is present as an alkaline-earth meal salt of glucuronoxylan acetate in a solution obtained by dissolving cellulose acetate in acetone, an aqueous acetone solution, or another solvent. The alkaline earth metal salt of glucuronoxylan acetate has such a property that crosslinking is promoted by increasing the temperature of the solution so that precipitation is likely to occur. In the process of spinning cellulose acetate, a spinning tower has a high temperature to evaporate acetone contained in the cellulose acetate solution extruded through a spinneret. Therefore, the cellulose acetate solution in the vicinity of the spinneret may also have a high temperature, in which case an alkaline-earth metal salt of glucuronoxylan acetate is precipitated in the cellulose acetate solution and accumulated in the spinneret to clog holes of the spinneret so that end-breakage is likely to occur.

The heat stability under wet conditions will be described. If cellulose acetate has poor heat stability under wet conditions, a reduction in molecular weight is likely to occur in the process of purifying the cellulose acetate, which causes coloring of the cellulose acetate or an increase in the acetic acid content of the cellulose acetate. Further, if fibrous cellulose acetate has poor heat stability under wet conditions, deacetylation or a reduction in molecular weight is likely to occur, which shortens the period during which the properties of the fibrous cellulose acetate can be guaranteed. That is, when such cellulose acetate having poor heat stability under wet conditions is formed into fibers, the cellulose acetate fibers may be colored or may have an acid smell. It is to be noted that when used for applications that are sensitive to human five senses, especially for tobacco filters, cellulose acetate fibers are required to have particularly high heat stability under wet conditions because poor heat stability under wet conditions is the cause of a deterioration of taste and an acid smell.

If $[Ca/H_2SO_4]$ and $[Mg/H_2SO_4]$ do not satisfy the relationship represented by the above formula (1) but satisfy the following relational expression: $[Ca/H_2SO_4] > 0$, $[Mg/H_2SO_4] > 0$, and $[Ca/H_2SO_4] > (37.7 - [Mg/H_2SO_4])/10.3$, end-breakage is likely to occur in the process of spinning the cellulose acetate. If $[Ca/H_2SO_4]$ and $[Mg/H_2SO_4]$ do not satisfy the relationship represented by the above formula (1) but satisfy the following relational expression: $[Ca/H_2SO_4] > 0$, $[Mg/H_2SO_4] > 0$, and $(2.70 - [Mg/H_2SO_4])/1.62 > [Ca/H_2SO_4]$, the cellulose acetate has poor heat stability under wet conditions.

It is preferred that the cellulose acetate according to the present invention has a chemical equivalent ratio of calcium content to residual sulfuric acid content $[Ca/H_2SO_4]$ and a chemical equivalent ratio of magnesium content to residual sulfuric acid content $[Mg/H_2SO_4]$ which satisfy a relationship represented by the following formula (2), and has an acetylation degree of 54.0% or more but 56.0% or less. In this case, the deacetylation of the cellulose acetate is further prevented, which makes it possible to produce cellulose acetate fibers having more excellent heat stability under wet conditions.

$$[Ca/H_2SO_4] > 0, \ [Mg/H_2SO_4] > 0,$$

and

$$[Mg/H_2SO_4] \geq (-1.78)[Ca/H_2SO_4] + 4.10 \qquad (2)$$

The relationship represented by the above formula (2) will be described with reference to the graph shown in FIG. 1. A region satisfying the relationship represented by the above formula (2) is a region where $[Mg/H_2SO_4]$ and $[Ca/H_2SO_4]$ are both positive, which is composed of a straight dashed line 1 passing through 4.10 on the axis of $[Mg/H_2SO_4]$ and 2.30 on the axis of $[Ca/H_2SO_4]$ and an area where $[Mg/H_2SO_4]$ and $[Ca/H_2SO_4]$ are above the straight dashed line 1.

Further, it is more preferred that the cellulose acetate according to the present invention has a chemical equivalent ratio of calcium content to residual sulfuric acid content $[Ca/H_2SO_4]$ and a chemical equivalent ratio of magnesium content to residual sulfuric acid content $[Mg/H_2SO_4]$ which satisfy a relationship represented by the following formula (3). In this case, precipitation of an alkaline-earth metal salt of glucuronoxylan acetate in a cellulose acetate solution is further prevented, and therefore the occurrence of end-breakage can further be reduced in the process of spinning the cellulose acetate. This makes it possible to obtain yarns having a lower filament denier and increase the speed of spinning.

$$[Ca/H_2SO_4] > 0,\ [Mg/H_2SO_4] > 0,$$

and

$$[Mg/H_2SO_4] \leq (-9.59)[Ca/H_2SO_4] + 29.8 \qquad (3)$$

The relationship represented by the above formula (3) will be described with reference to the graph shown in FIG.1. A region satisfying the relationship represented by the above formula (3) is a region where $[Mg/H_2SO_4]$ and $[Ca/H_2SO_4]$ are both positive, which is composed of a straight dashed line 2 passing through 29.8 on the axis of $[Mg/H_2SO_4]$ and 3.10 on the axis of $[Ca/H_2SO_4]$ and an area where $[Mg/H_2SO_4]$ is below the straight dashed line 2.

The residual sulfuric acid content is preferably measured by a so-called combustion-trapping method that is less affected by a solid inorganic sulfate salt. According to such a combustion-trapping method, the residual sulfuric acid content can be measured by combusting the dried cellulose ester in an electric furnace at about 1300°C, trapping sublimed sulfurous acid gas in a hydrogen peroxide solution having a predetermined concentration, and titrating the hydrogen peroxide solution with a base having a predetermined concentration (e.g., an aqueous sodium hydroxide solution). The measured value is the amount of $H_2SO_4$, and is expressed as a sulfuric acid content per gram of the absolute dry cellulose acetate in the unit mol or ppm. It is to be noted that when the sulfuric acid content is expressed in the unit mol or ppm, a formula weight of 98.0 g/mol may be used for $H_2SO_4$.

The magnesium content and the calcium content can be measured by first performing pretreatment, in which the dried cellulose acetate is completely combusted and the resulting ash is dissolved in hydrochloric acid, and then subjecting the thus obtained solution to atomic absorption spectrometry. More specifically, the magnesium content and the calcium content can be measured in the following manner. First, 3.0 g of a sample is weighed in a crucible and carbonized on a heater, and is then incinerated in an electric furnace at 750 to 850°C for about 2 hours. The resulting ash is cooled for about 30 minutes, and then 25 mL of a 0.07% hydrochloric acid solution is added to dissolve the ash by heating at 220 to 230°C. The solution is cooled, and then distilled water is added until the volume of the solution reaches 200 mL. The thus obtained solution is used as a test solution. The absorbances of the test solution are measured against a reference solution using an atomic absorption spectrophotometer to determine the calcium content (Ca) and magnesium content (Mg) of the test solution. The amounts of calcium (Ca) and magnesium (Mg) contained in 1 g of the sample can be determined by the following formula using the calcium content and magnesium content of the test solution, respectively. The calcium content and the magnesium content may be expressed in the unit mol. Here, the moisture content (wt%), that is, the amount of moisture contained in the sample can be measured using, for example, a Kett moisture meter (METTLER TOLEDO HB43). About 2.0 g of the wet sample is placed on an aluminum tray of a Kett moisture meter and heated at 120°C until a constant weight is reached. The amount of moisture (wt%) contained in the sample can be calculated from a change in weight before and after heating. It is to be noted that when the calcium content and the magnesium content are expressed in the unit mol or ppm, an atomic weight of 40.0 g/mol and an atomic weight of 24.3 g/mol may be used for calcium and magnesium, respectively.

[Formula 1]

$$\text{Ca or Mg content (ppm) of sample} = \frac{\text{Ca or Mg content (ppm) of test solution} \times 200}{\text{sample weight (g)} \times (1 - \text{moisture content (wt\%)} / 100)}$$

[Acetylation degree]

The average acetylation degree of the cellulose acetate according to the present invention is preferably 51.8% or more but 58.9% or less, more preferably 54.0% or more but 56.0% or less. If the average acetylation degree is less than 51.8%, resulting yarns have poor strength or tobacco filters produced using the cellulose acetate adversely affect the taste of tobaccos. If the average acetylation degree exceeds 58.9%, the solubility of the cellulose acetate in a solvent such as acetone reduces.

The acetylation degree is determined according to a method for measuring and calculating acetylation degree specified in ASTM-D-817-91 (Test method of cellulose acetate and the like).

[Production of cellulose acetate]

A method for producing cellulose acetate will be described in detail. The cellulose acetate according to the present invention can be produced through a series of steps: (1) disintegrating cellulose pulp; (2) pretreating the disintegrated cellulose pulp by bringing it into contact with acetic acid; (3) esterifying the pretreated cellulose pulp by bringing it into contact with anhydrous acetic acid and 20 parts by weight or less of concentrated sulfuric acid per 100 parts by weight of the cellulose pulp; (4) adding a neutralizer to hydrolyze cellulose acetate obtained by the esterification; (5) precipitating the cellulose acetate whose acetylation degree has been adjusted by the hydrolysis; and (6) adding at least one stabilizer selected from the group consisting of calcium hydroxide or another calcium salt and magnesium acetate or another magnesium salt to the precipitated cellulose acetate. The chemical equivalent ratio of calcium content to residual sulfuric acid content [$Ca/H_2SO_4$] and the chemical equivalent ratio of magnesium content to residual sulfuric acid content [$Mg/H_2SO_4$] of cellulose acetate to be obtained can be adjusted by changing the amount of each of the neutralizer added at the end of the esterification step (3) that will be described later or at the start of the hydrolysis step (4), a precipitator used in the precipitation step (5), and the stabilizer added in the stabilization step (6) or the total amount of them. It is to be noted that a general cellulose acetate production method can be found in "Wood Chemistry" (Volume 1) (Migita et al., published by KYORITSU SHUPPAN CO.LTD., 1968, pp. 180 to 190).

(Cellulose pulp)

Wood pulp or linter pulp may be used as cellulose acetate (cellulose source) as a raw material of the cellulose acetate according to the present invention. Examples of the wood pulp include softwood pulp and hardwood pulp. Examples of the softwood pulp include those obtained from spruce, pine, and hemlock. Examples of the hardwood pulps include those obtained from eucalyptus and acacia. These pulps may be used singly or in combination of two or more of them, and softwood pulp and hardwood pulp may be used in combination.

It is advantageous that pulp whose mannose content of total constituent sugar components is high and/or pulp whose xylose content with respect to mannose content is low are/is used as the cellulose pulp. The mannose (mannose skeleton or mannose unit) content (mol%) of sugar chain components (or constituent sugar components) constituting the pulp is about 0.4 or more (e.g., 0.4 to 2.5), preferably about 0.5 to 2 (e.g., 0.5 to 1.5), more preferably about 0.6 to 1.5. Further, the ratio (mole ratio) of xylose content to mannose content is usually less than 3, for example, about 0.3 to 2.8, preferably about 0.3 to 2, and may be about 0.5 to 1.5. It is to be noted that the cellulose pulp may contain xylose (xylose skeleton or xylose unit), and the xylose content thereof (mol%) is, for example, about 0.5 to 3, preferably about 0.7 to 2, more preferably about 0.8 to 1.5. It is to be noted that the mannose content and the xylose content of the pulp or the cellulose acetate can be determined in the following manner.

First, 200 mg of a sufficiently-dried sample is precisely weighed, 3 mL of 72% sulfuric acid is added, and the sample is completely and ultrasonically dissolved over 2 hours or more while the mixture is cooled in ice water. Then, 39 mL of distilled water is added to the resulting solution, and the solution is sufficiently shaken and refluxed at 110°C for 3 hours in a nitrogen stream and then cooled for 30 minutes. Then, 14 g of barium carbonate is added, and the solution is ultrasonically neutralized while cooled in ice water. After 30 minutes, 10 g of barium carbonate is further added to neutralize the solution until the pH of the solution reaches about 5.5 to 6.5, and then the solution is filtered. The filtrate is diluted 100-fold by weight with ultrapure water to prepare a sample. Then, the obtained sample is analyzed by ion chromatography under the following conditions.

High-performance liquid chromatography (HPLC, Model DX-AQ manufactured by Dionex Corporation)
Detector: Pulsed amperometric detector (Gold electrode)
Column: Carbo Pac PA-1 (250 × 4 mm) manufactured by Dionex Corporation
Eluent: 2mM NaOH
Flow rate: 1.0 mL/min
Post column: Model AMMS-II manufactured by Dionex Corporation

The mole ratio between mannose and xylose can be determined from a calibration curve previously prepared using mannose, xylose, and glucose standards. The total amount of these three components is taken as 100 to express each of the constituent sugar component contents in mol%.

The $\alpha$-cellulose content (wt%) of the cellulose pulp may be usually about 90 to 99 (e.g., 93 to 99), preferably about 96 to 98.5 (e.g., 97.3 to 98).

The water content of the cellulose pulp is preferably 5.0 to 9.0% by weight, more preferably 6.0 to 8.0% by weight, even more preferably 6.5 to 7.5% by weight. If the water content of the cellulose pulp is too low, the reactivity of the pulp is remarkably deteriorated.

On the other hand, if the water content is too high, an excessive amount of anhydrous acetic acid needs to be used for reaction, which is disadvantageous from the viewpoint of costs. When the moisture content is within the above range, the properties, such as acetylation degree, of the cellulose acetate can be easily controlled.

The cellulose pulp to be used may be in the form of sheet. In this case, the sheet preferably has a basis weight of 300 to 850 g/m$^2$, a density of 0.40 to 0.60 g/cm$^3$, and a burst strength of 50 to 1000 kPa, but the cellulose pulp is not limited to such a sheet.

(Disintegration)

The method for producing cellulose acetate according to the present invention includes the step (1) of disintegrating cellulose pulp. This allows reactions in subsequent steps to efficiently and uniformly proceed and also makes handling easy. The disintegration step is particularly effective when the cellulose pulp is supplied in the form of a sheet.

In the step (1) in which cellulose pulp is disintegrated, cellulose pulp is disintegrated by a wet disintegration method or a dry disintegration method. The wet disintegration method is a method in which water or water vapor is added to cellulose pulp, such as pulp sheets, to disintegrate the cellulose pulp. Examples of the wet disintegration method include: a method in which activation by water vapor and high-shear stirring in a reactor are performed; and a method in which cellulose pulp is disintegrated in a dilute aqueous acetic acid solution to obtain a slurry, and then the slurry is repeatedly subjected to dehydration and acetic acid substitution, that is, so-called slurry pretreatment is performed. The dry disintegration method is a method in which cellulose pulp, such as pulp sheets, is directly disintegrated in a dry state. Examples of the dry disintegration method include: a method in which pulp is roughly disintegrated by a disc refiner having pyramid teeth and then finely disintegrated by a disc refiner having linear teeth; and a method in which a turbo mill is used which includes a cylindrical outer case having a liner attached to its inner wall, a plurality of discs that rotate at a high speed around the center line of the outer case; and a large number of blades radially attached around the center line in such a manner that each of the blades is located between the discs, and an object to be disintegrated is supplied into the outer case and disintegrated by three kinds of impact actions caused by hitting by the blades, collision with the liner, and high-frequency pressure oscillation generated by the action of the high-speed rotating discs, the blades, and the liner. The disintegration method is not limited to these methods.

(Pretreatment step)

In the step (2) in which the disintegrated cellulose pulp is pretreated by bringing it into contact with acetic acid, acetic acid and/or sulfuric acid-containing acetic acid may preferably be added in an amount of 10 to 500 parts by weight per 100 parts by weight of the disintegrated cellulose pulp (disintegrated pulp). At this time, the acetic acid used may be 96 to 100 wt% acetic acid. The pretreatment using sulfuric acid-containing acetic acid is performed by a method in which disintegrated cellulose pulp is pretreated with acetic acid containing sulfuric acid, and 1 to 10 w% of sulfuric acid may be contained in acetic acid.

Examples of a method for adding acetic acid and/or sulfuric acid-containing acetic acid to cellulose pulp include: a method in which acetic acid or sulfuric acid-containing acetic acid is added in one step and a method in which acetic acid or sulfuric acid-containing acetic acid is added in two or more separate steps, such as a method in which acetic acid is first added and then sulfuric acid-containing acetic acid is added after a certain period of time or a method in which sulfuric acid-containing acetic acid is first added and then acetic acid is added after a certain period of time. More specifically, acetic acid and/or sulfuric acid-containing acetic acid may be added by spraying it or them onto cellulose pulp and mixing the cellulose pulp.

After acetic acid and/or sulfuric acid-containing acetic acid is/are added to cellulose pulp, the cellulose pulp is activated by pretreatment performed by allowing it to stand at 17 to 40°C for 0.2 to 48 hours or by hermetically sealing and stirring it at 17 to 40°C for 0.1 to 24 hours.

(Esterification step)

In the step (3) in which the pretreated cellulose pulp is esterified by bringing it into contact with anhydrous acetic acid and 20 parts by weight or less of concentrated sulfuric acid per 100 parts by weight of the cellulose pulp, esterification can be initiated by, for example, adding the cellulose pulp activated by pretreatment to a mixture of acetic acid, anhydrous acetic acid, and concentrated sulfuric acid, or adding a mixture of acetic acid and anhydrous acetic acid and concentrated sulfuric acid to the cellulose pulp activated by pretreatment, or adding a mixture of acetic acid and anhydrous acetic acid to the cellulose pulp activated by pretreatment and then adding concentrated sulfuric acid.

When a mixture of acetic acid and anhydrous acetic acid is prepared, the mixture is not particularly limited as long as the mixture contains acetic acid and anhydrous acetic acid. However, the ratio between acetic acid and anhydrous acetic acid is preferably 300 to 600 parts by weight: 200 to 400 parts by weight, more preferably 350 to 530 parts by weight: 240 to 280 parts by weight.

In the esterification reaction, the ratio of the mixture of acetic acid and anhydrous acetic acid is preferably 500 to 1000 parts by weight per 100 parts by weight of the cellulose (cellulose pulp) as a raw material, and the ratio of concentrated sulfuric acid may be 20 parts by weight or less, for example, 1 to 20 parts by weight per 100 parts by weight of the cellulose (cellulose pulp) as a raw material. At this time, the ratio of acetic acid may be 96 to 100 parts by weight. If the amount of sulfuric acid used as an esterification catalyst is too small, the reaction time is too long so that productivity reduces. If the amount of sulfuric acid used as an esterification catalyst is too large, the reaction proceeds too quickly and is therefore difficult to control. The amount of sulfuric acid affects the amount of residual sulfuric acid.

The esterification reaction can be performed at a temperature of, for example, about 0 to 55°C, preferably about 20 to 50 °C, more preferably about 30 to 50°C. The esterification reaction may be carried out at a relatively low temperature (e.g., 10°C or lower, preferably 0 to 10°C) at the beginning. The reaction time at such a low temperature may be, for example, 30 minutes or longer (e.g., about 40 minutes to 5 hours, preferably about 60 to 300 minutes) from the start of the esterification reaction. The esterification time (total esterification time) varies depending on the reaction temperature etc., but is, for example, in the range of 20 minutes to 36 hours, preferably in the range of 30 minutes to 20 hours. Particularly, the esterification reaction is preferably performed at least at 30 to 50°C for about 30 minutes to 180 minutes (preferably about 50 minutes to 150 minutes). It is to be noted that the time from when the pulp is brought into contact with the catalyst until when a deactivator is added is defined as the esterification time.

The esterification reaction may also be performed under reduced pressure. For example, the pressure in a reaction system is reduced to 5.3 to 20 kPa, preferably 6 to 12 kPa while a mixture of the cellulose, anhydrous acetic acid, and acetic acid is stirred, and then a first-stage catalyst is added to initiate the esterification reaction. The mixed vapor of acetic acid and anhydrous acetic acid that evaporate are condensed in a condenser and distilled off from the reaction system, the reaction system is maintained at the above vacuum degree and a temperature of about 50 to 65°C to continue the esterification reaction, and a second-stage catalyst is added at a predetermined time point in the course of the esterification reaction to further continue the reaction under reduced pressure.

At the time when 86 to 201 parts by weight of the mixture of acetic acid and anhydrous acetic acid has been distilled off or distillation off of a condensate of the mixture has virtually stopped, the pressure in the reaction system is gradually returned to ordinary pressure over about 5 minutes, and the reaction is continued at 50 to 80°C for 1 to 60 minutes.

(Hydrolysis step)

The step (4) will be described in which cellulose acetate obtained by the above-described esterification is hydrolyzed by adding a neutralizer. The cellulose is acetylated by the above-described esterification reaction, and part of the sulfuric acid is bound to the cellulose as a sulfate ester. Therefore, after the completion of the esterification reaction, the cellulose acetate is hydrolyzed to eliminate acetyl groups and combined sulfuric acid in order to obtain cellulose acetate having a desired acetyl substitution degree, especially cellulose diacetate and to improve heat stability under wet conditions. In the hydrolysis step, the esterification reaction is stopped by adding a neutralizer such as water, dilute acetic acid (1 to 50 wt% aqueous acetic acid solution), or an aqueous solution of a basic substance so that the anhydrous acetic acid used as an esterification agent is deactivated. As described above, it is preferred that water is allowed to be present in the reaction system by adding a neutralizer. It is to be noted that the hydrolysis is also referred to as saponification.

Among the above-mentioned neutralizers such as water, dilute acetic acid (1 to 50 wt% aqueous acetic acid solution), and an aqueous solution of a basic substance, an aqueous solution of a basic substance is preferred.

When water or dilute acetic acid is used, water may be added in such a manner that it reacts with the anhydrous acetic acid present in the reaction mixture containing the cellulose acetate to produce acetic acid so that the water content in the reaction mixture containing the cellulose acetate after the hydrolysis step is 5 to 70 mol% with respect to the acetic acid. If the water content is less than 5 mol%, the hydrolysis reaction does not proceed but depolymerization proceeds so that cellulose acetate having a low viscosity is obtained. If the water content exceeds 70 mol%, a cellulose ester (cellulose triacetate) resulting from the esterification reaction precipitates and is not subjected to the hydrolysis reaction. Therefore, the hydrolysis reaction of the precipitated cellulose ester does not proceed.

Examples of the neutralizer such as an aqueous solution of a basic substance include: alkali metal compounds (e.g., alkali metal hydroxides such as sodium hydroxide and potassium hydroxide; alkali metal carbonates such as sodium carbonate and potassium carbonate; alkali metal hydrogen carbonates such as sodium hydrogen carbonate and potassium hydrogen carbonate; alkali metal carboxylates such as sodium acetate and potassium acetate; and sodium alkoxides such as sodium methoxide and sodium ethoxide); and alkaline-earth metal compounds (e.g., alkaline-earth metal hydroxides such as magnesium hydroxide and potassium hydroxide; alkaline-earth metal carbonates such as magnesium carbonate and calcium carbonate; alkaline-earth metal hydrogen carbonates such as calcium hydrogen carbonate; alkaline-earth metal carboxylates such as magnesium acetate and calcium acetate; and alkaline-earth metal alkoxides such as magnesium ethoxide). Among these neutralizers, alkaline-earth metal compounds, especially magnesium compounds such as magnesium acetate are preferred.

The neutralizer may neutralize part of the sulfuric acid used as a catalyst for esterification, in which case the sulfuric acid that is a remaining esterification catalyst is used as a catalyst for hydrolysis. Alternatively, all the sulfuric acid that is a remaining catalyst may be used as a catalyst for hydrolysis without being neutralized. According to a preferred embodiment, the sulfuric acid that is a remaining esterification catalyst is used as a catalyst for hydrolysis to hydrolyze (deacetylate) the cellulose acetate. It is to be noted that in the hydrolysis, a solvent or the like (e.g., acetic acid, methylene chloride, water, or alcohol) may newly be added, if necessary.

A hydrolysis method is divided into high-temperature ripening and normal-temperature ripening. The hydrolysis step performed at normal temperature is referred to as normal-temperature ripening. In this case, the maximum achieving temperature in the reaction system is 55°C or higher but lower than 100°C, preferably 55°C or higher but lower than 90°C. The hydrolysis performed at high temperature is referred to as high-temperature ripening. In this case, the maximum achieving temperature in the reaction system is 100°C or higher but 200°C or lower. In high-temperature ripening, the temperature in the system is increased using water vapor.

(High-temperature ripening)

For example, when the acetylation degree is to be adjusted to 54.0 or more but 56.0% or less, the time of the hydrolysis reaction is not particularly limited, but the temperature in the reaction system is maintained at 125 to 170°C for 3 minutes to 6 hours to obtain cellulose diacetate having a desired acetylation degree. A higher acetylation degree within the above range can be achieved by shortening the time of the hydrolysis reaction. Here, the time of the hydrolysis reaction refers to the time from when feeding of the neutralizer is started to when the hydrolysis reaction is stopped.

More specifically, the hydrolysis reaction can be started and stopped by maintaining the completely-neutralized reaction mixture at a high temperature of 140 to 155°C for 10 to 50 minutes using an autoclave and then gradually flashing the reaction mixture in the atmosphere to reduce the temperature of the reaction mixture to 50 to 120°C.

(Normal-temperature ripening)

For example, when the acetylation degree is to be adjusted to 54.0 or more but 56.0% or less, the most preferred combination of reaction conditions in the hydrolysis step, that is, the most preferred combination of the amount of water to be added and the temperature of hydrolysis in the hydrolysis step is a combination of a relatively-large amount of water to be added and a relatively-low hydrolysis temperature. More specifically, it is most preferred that the amount of water to be added is 38 to 48 mol% with respect to acetic acid, and the temperature of hydrolysis is in the range of 65 to 78°C. When the amount of the sulfuric acid that is an esterification catalyst is large, changes in the amount of water to be added and the temperature of hydrolysis greatly vary the rate of depolymerization. Therefore, when the amount of water to be added and the temperature of hydrolysis are within their respective ranges described above, the amount of the sulfuric acid that is an esterification catalyst is preferably small. More specifically, for example, the amount of concentrated sulfuric acid is 1.13 to 2.53 parts by weight per 100 parts by weight of cellulose triacetate obtained in the esterification step (that is, 2 to 4.5 parts by weight per 100 parts by weight of the cellulose pulp).

(Precipitation step)

In the step (5) in which the cellulose acetate whose acetylation degree has been adjusted by the above-described hydrolysis is precipitated, the cellulose acetate can be precipitated by adding a precipitator such as water, dilute acetic acid, or an aqueous magnesium acetate solution to the mixture containing the cellulose acetate. Here, dilute acetic acid refers to a I to 50 wt% aqueous acetic acid solution. The aqueous magnesium acetate solution preferably has a concentration of 5 to 30 wt%.

When a precipitator is added to the reaction mixture containing the cellulose acetate to precipitate the cellulose acetate, the precipitator is preferably added so as to rapidly exceeds the amount of the precipitator at the precipitation point of the cellulose acetate. More specifically, for example, (1) the precipitator may be added at a time so as to exceed the amount of the precipitator at the precipitation point of the cellulose acetate, (2) the precipitator may be added in two separate steps in such a manner that the precipitator is added so as to exceed the amount of the precipitator at the precipitation point of the cellulose acetate and then further added, or (3) the precipitator may be added in two separate steps in such a manner that the precipitator is added so as not to exceed the amount of the precipitator at the precipitation point of the cellulose acetate and then further added in a large amount.

The reaction mixture containing the cellulose acetate and the precipitator are preferably mixed. Examples of a specific means for mixing include a method in which the reaction mixture containing the cellulose acetate and the precipitator are stirred using an industrial mixer; and a method in which the precipitator is added to the reaction mixture containing the cellulose acetate, and the resulting mixture is kneaded using a twin-screw kneader.

(Stabilization step)

In the step (6) in which at least one stabilizer selected from the group consisting of calcium hydroxide or another calcium salt and magnesium acetate or another magnesium salt is added to the precipitated cellulose acetate (hereinafter, also referred to as stabilization step), the precipitated cellulose acetate is stabilized. More specifically, a stabilizer may be added to the generated cellulose acetate, which is composed of calcium hydroxide or another calcium salt, magnesium acetate or another magnesium salt, or calcium hydroxide or another calcium salt and magnesium acetate or another magnesium salt. This makes it possible to obtain cellulose acetate containing the stabilizer.

The stabilizer used to perform stabilization treatment may be, for example, an aqueous stabilizer solution having a predetermined concentration selected from the group consisting of 1) an aqueous calcium hydroxide solution having a concentration adjusted to 0.0017 to 0.0030 wt%, 2) an aqueous magnesium acetate solution having a concentration adjusted to 0.01 to 0.15 wt%, and 3) an aqueous calcium hydroxide solution having a concentration adjusted to 0.001 to 0.0025 wt% and an aqueous magnesium acetate solution having a concentration adjusted to 0.01 to 0.08 wt%. By adding calcium hydroxide and/or magnesium acetate at their respective concentrations described above, it is possible to obtain cellulose acetate that has excellent heat stability under wet conditions and is capable of reducing the occurrence of end-breakage in a spinning process. It is to be noted that 1 ppm = $1 \times 10^{-4}$ wt%.

In the step (6) in which a stabilizer is added to the precipitated cellulose acetate, the precipitated cellulose acetate can be stabilized by, for example, separating the cellulose acetate and immersing the cellulose acetate in an aqueous stabilizer solution whose stabilizer concentration has been adjusted to a predetermined concentration. Here, it is preferred that the precipitated cellulose acetate is washed with water before a stabilizer is added to the precipitated cellulose acetate but after the precipitated cellulose acetate is separated. By washing the precipitated cellulose acetate with water, free metal components or sulfuric acid components can be removed. A method for industrially adding the stabilizer may be one in which a dilute aqueous solution of the metal compound mentioned above is added to a suspension in which a cellulose derivative is dispersed.

(Drying)

After the stabilizer is added, the cellulose acetate is preferably dried. A method for drying the cellulose acetate is not particularly limited, and may be a known method such as heating, air drying, or decompression.

The cellulose acetate according to the present invention can be formed into fibers by spinning. A spinning method used at this time is not particularly limited, but is preferably dry spinning. Here, dry spinning is a method in which cellulose acetate is dissolved in a predetermined solvent, the resulting solution is extruded through a spinneret, and the solvent is evaporated by hot air to obtain fibers. Examples of the predetermined solvent include acetone and an aqueous acetone solution.

The cellulose acetate according to the present invention and the method for producing the same make it possible to reduce the occurrence of end-breakage in a spinning process and to obtain fibers having excellent heat stability under wet conditions, and the fibers can be suitably used for tobacco filters etc.

Examples

Hereinbelow, the present invention will be specifically described with reference to examples, but the technical scope of the present invention is not limited by these examples.

Various physical properties described in Examples and Comparative Examples, which will be described later, were evaluated by the following methods.

[Calcium Content and Magnesium Content]

The calcium content and magnesium content of cellulose acetate were measured in the following manner. First, 3.0 g of a sample was weighed in a crucible, carbonized on a heater, and then incinerated in an electric furnace at 750 to 850°C for about 2 hours. The resulting ash was cooled for about 30 minutes, and then 25 mL of a 0.07% hydrochloric acid solution was added to dissolve the ash by heating at 220 to 230°C. The solution was cooled, and then distilled water was added until the volume of the solution reached 200 mL. The thus obtained solution was used as a test solution. The absorbances of the test solution was measured against a reference solution using an atomic absorption spectrophotometer to determine the calcium content (Ca) and magnesium content (Mg) of the test solution. The calcium content (Ca) and magnesium content (Mg) of the sample were determined by the following formula using the calcium content (Ca) and magnesium content (Mg) of the test solution, respectively. The calcium content (Ca) and magnesium content (Mg) were expressed in the unit mol. Here, the amount of moisture (wt%), that is, the amount of moisture contained in the sample was measured using, for example, a Kett moisture meter (METTLER TOLEDO HB43). About 2.0 g of the wet sample is placed on an aluminum tray of a Kett moisture meter and heated at 120°C until a constant weight is reached. The amount of moisture (wt%) contained in the sample can be calculated from a change in weight before and after heating.

[Formula 2]

$$\text{Ca or Mg content (ppm) of sample} = \frac{\text{Ca or Mg content (ppm) of test solution} \times 200}{\text{sample weight (g)} \times (1 - \text{moisture content (wt\%)} / 100)}$$

[Residual sulfuric acid content]

The residual sulfuric acid content of cellulose acetate was measured in the following manner. Cellulose acetate dried using an electric dryer was heated in an electric furnace at 1300°C, and sublimated sulfurous acid gas was trapped in 10% hydrogen peroxide water and titrated with a normal aqueous sodium hydroxide solution to measure the amount of $H_2SO_4$. The amount of $H_2SO_4$ was defined as the residual sulfuric acid content of cellulose acetate. The measured value is expressed as a sulfuric acid content per gram of absolute dry cellulose acetate in the unit mol or ppm.

[Acetylation degree]

About 0.52 g of a pulverized sample was placed in a weighing bottle, dried at 105 ± 5°C for 2 hours, and cooled in a desiccator for about 40 minutes. The dried pulverized sample was precisely weighed and transferred into a flask, the empty weighing bottle was again precisely weighed, and the weight difference was defined as a sample weight. About 2 mL of ethanol was previously added to the flask. The sample was well wetted, 50 mL of acetone was then added, and the mixture was stirred for about 30 minutes to completely dissolve the sample. Then, 50 mL of 0.2 mol/L-NaOH solution was added thereto with stirring to form a white precipitate. The resulting mixture was stirred for about 1 minute and was then allowed to stand for about 3 hours. Then, 50 mL of 0.2 mL/L-HCl solution was added thereto with stirring, and the resulting mixture was allowed to stand for 15 minutes or more. A phenolphthalein solution was added as an indicator, and the mixture was titrated with a 0.2 mol/L-NaOH normal solution until a rose pink color appears (A mL). At the same time, a blank test was performed (B mL).

Acetylation degree was calculated by the following formula.

$$\text{Acetylation degree (\%)} = [(A-B) \times F \times 1.201] / \text{sample weight (g)}$$

F: Factor of 0.2 mol/L-NaOH normal solution

[Heat stability under wet conditions]

The heat stability under wet conditions of cellulose acetate was determined by measuring the amount of hydrolyzed acetic acid in the following manner. Dried cellulose acetate was pulverized using Nara Jiyu Mill, about 2.0 g of the pulverized cellulose acetate was weighed in a Pyrex (registered mark) test tube, and 2 mL of distilled water was added. Then, the test tube was hermetically sealed and put in boiling water for 7 hours. After cooling, the content in the test tube was washed out with boiling water on filter paper until the volume of filtrate reached 150 mL. This solution was titrated with a 0.01N-NaOH solution by using phenolphthalein as an indicator. At the same time, a blank test using only distilled water was performed, and heat stability under wet conditions was calculated by the following formula.

Heat stability under wet conditions (%) = (A-B) $\times$ F $\times$ 0.6 $\times$ $10^{-3}$ (g) / sample weight (g) $\times$ 100, wherein A: titer (mL) of the 0.01N-NAOH solution, B: titer (mL) of the 0.01N-NaOH solution in the blank test, and F: factor of the 0.01N-NaOH solution. It is to be noted that $0.6 \times 10^{-3}$ (g) is the weight of acetic acid that reacts with the titer (mL) of the 0.01N-NaOH solution, which is calculated on the basis of the following reaction formula.

$$CH_3COOH(60g/mol) + NaOH(40g/mol) \rightarrow CH_3COONa(2g/mol) + H_2O(18g/mol)$$

When the calculated value is less than 0.07%, the heat stability under wet conditions was evaluated as good, and when the calculated value is 0.07% or more, the heat stability under wet conditions was evaluated as poor.

[Resistance to end-breakage]

Resistance to end-breakage in the process of spinning cellulose acetate was evaluated in the following manner. First, 29.5 parts by weight of cellulose acetate, 67.5 parts by weight of acetone, 0.5 parts by weight of titanium oxide, and 2.5 parts by weight of pure water were mixed and dissolved to obtain a spinning solution (dope solution), and the spinning solution was filtered for defoaming. Then, the spinning solution was spun using a spinneret (95 mmφ) having 400 triangular holes having a side of 58 μm under conditions of a extrusion rate of 333 g/min and a spinning speed of 400 m/min, and dried in a drying zone at a primary air temperature of 100°C and a secondary air temperature of 95°C. This spinning test was continuously conducted for 10 days, and the frequency of occurrence of end-breakage (number of times per ton-product) over 10 days was evaluated, and the separability of the spinning solution from the spinneret at the start of spinning was evaluated as spinnability. It is to be noted that the spinnability was evaluated according to the following criteria.

Resistance to end-breakage was evaluated on the basis of a relative frequency of occurrence of end-breakage determined by taking the frequency of occurrence of end-breakage of Comparative Example 1 as 100. More specifically, when the relative frequency of occurrence of end-breakage was 100 or more, the resistance to end-breakage was evaluated as poor, and when the relative frequency of occurrence of end-breakage was less than 100, the resistance to end-breakage was evaluated as good.

(Example 1)

Dissolving kraft pulp as a cellulose raw material was disintegrated to obtain fluff pulp, and the fluff pulp was dried to achieve a moisture content of about 6%. Then, 31 parts of glacial acetic acid was added to 100 parts of the dried fluff pulp, and the fluff pulp was subjected to pretreatment for 1 hour to activate cellulose. The activated cellulose obtained by pretreatment was placed in an acetylation reactor under stirring, and a mixture of 270 parts of anhydrous acetic acid as an acetylation reagent and 330 parts of acetic acid as a reaction solvent was placed in the acetylation reactor at the same time. Then, 30 parts of a first-stage catalyst solution (3% sulfuric acid-acetic acid solution) was added over 0.5 minutes to initiate a reaction. The time at which the catalyst solution was started to add was defined as 0 minutes and set as the reference time of the reaction. The temperature of the reaction system quickly increased and reached 55°C after about 5 minutes. Then, the temperature of the reaction system was adjusted to be constant. At the time point of 5 minutes (DS = 0.83), 10 parts of a second-stage catalyst solution (3% sulfuric acid-acetic acid solution) was added. Then, at the time point of 60 minutes, 11 parts of a 24% aqueous magnesium acetate solution was added to completely neutralize sulfuric acid in the reaction system and to make magnesium acetate excessive. Then, 71 parts of water at 60°C was added to the completely-neutralized reaction mixture, and the reaction mixture was stirred. This reaction mixture was transferred into an autoclave and was heated to 150°C over 60 minutes by external heating. The reaction mixture was maintained at 150°C for 30 minutes and then externally cooled to 100°C in about 20 minutes to perform hydrolysis to obtain a reaction mixture containing cellulose diacetate.

Then, about 234 parts of a 15% aqueous dilute acetic acid solution was added to 100 parts by weight of the reaction mixture containing cellulose acetate to form a precipitate. The cellulose acetate obtained as a precipitate was washed with water, and then 2 parts by weight of a 0.0027 wt% aqueous calcium hydroxide solution was added as a stabilizer to 100 parts by weight of the cellulose acetate. Then, the cellulose acetate was dried to obtain desired cellulose acetate. The calcium content, magnesium content, residual sulfuric acid content, a chemical equivalent ratio of calcium content to residual sulfuric acid content [$Ca/H_2SO_4$], a chemical equivalent ratio of magnesium content to residual sulfuric acid content [$Ma/H_2SO_4$], acetylation degree, heat stability under wet conditions, and resistance to end-breakage of the obtained cellulose acetate were evaluated, and the results are shown in Table 1.

(Examples 2 to 10 and Comparative Examples 1 to 8)

Cellulose acetate was obtained in the same manner as in Example 1 except that a stabilizer shown in Table 1 was used instead of the 0.0027 wt% aqueous calcium hydroxide solution. It is to be noted that when calcium hydroxide and magnesium acetate were both used, the amount of each of the stabilizers was 2 parts by weight per 100 parts by weight of cellulose acetate obtained as a precipitate, and calcium hydroxide was first added, and then magnesium acetate was subsequently added. The calcium content, magnesium content, residual sulfuric acid content, the chemical equivalent ratio of calcium content to residual sulfuric acid content [$Ca/H_2SO_4$], the chemical equivalent ratio of magnesium content to residual sulfuric acid content [$Ma/H_2SO_4$], acetylation degree, heat stability under wet conditions, and resistance to end-breakage of the obtained cellulose acetate were evaluated, and the results are shown in Table 1.

(Comparative Example 9)

Cellulose acetate was obtained in the same manner as in Example 1 except that the 0.0027 wt% aqueous calcium hydroxide solution was not used as a stabilizer. The calcium content, magnesium content, residual sulfuric acid content, the chemical equivalent ratio of calcium content to residual sulfuric acid content [$Ca/H_2SO_4$], the chemical equivalent ratio of magnesium content to residual sulfuric acid content [$Ma/H_2SO_4$], acetylation degree, heat stability under wet conditions, and resistance to end-breakage of the obtained cellulose acetate were evaluated, and the results are shown in Table 1.

[Table 1]

| | Stabilizer | | Calcium content | Magnesium content | Residual sulfuric acid content | [Ca/H$_2$SO$_4$] | [mg/H$_2$SO$_4$] | Acetylation degree (%) | Heat stability under net conditions | | Resistance to end-breakage | |
|---|---|---|---|---|---|---|---|---|---|---|---|---|
| | Calcium hydroxide (wt%) | Magnesium acetate (wt%) | mmol/kg | mmol/kg | mmol/kg | mole ratio | mole ratio | | good/poor | (%) | good/poor | Relative frequency of occurrence of end-breakage |
| Example 1 | 0.0027 | 0 | 1.85 | 0.08 | 0.58 | 3.18 | 0.14 | 55.47 | good | 0.03 | good | 85 |
| Example 2 | 0.0022 | 0 | 1.50 | 0.08 | 0.58 | 2.58 | 0.14 | 55.50 | good | 0.04 | good | 71 |
| Example 3 | 0 | 0.139 | 0.05 | 17.28 | 0.58 | 0.09 | 29.73 | 55.48 | good | 0.00 | good | 81 |
| Example 4 | 0 | 0.0367 | 0.05 | 4.94 | 0.58 | 0.09 | 8.49 | 55.45 | good | 0.02 | good | 38 |
| Example 5 | 0.0025 | 0.0196 | 1.75 | 2.88 | 0.58 | 3.01 | 4.96 | 55.52 | good | 0.00 | good | 82 |
| Example 6 | 0.0019 | 0.0469 | 1.12 | 6.17 | 0.58 | 1.94 | 10.62 | 55.49 | good | 0.00 | good | 69 |
| Example 7 | 0.0014 | 0.0776 | 0.62 | 9.87 | 0.58 | 1.08 | 16.99 | 55.61 | good | 0.00 | good | 63 |
| Example 8 | 0.0013 | 0.0162 | 0.50 | 2.47 | 0.58 | 0.86 | 4.25 | 55.60 | good | 0.01 | good | 33 |
| Example 9 | 0.0017 | 0 | 1.00 | 0.16 | 0.59 | 1.72 | 0.28 | 55.58 | good | 0.06 | good | 52 |
| Example 10 | 0 | 0.0104 | 0.02 | 1.77 | 0.58 | 0.04 | 3.04 | 55.54 | good | 0.06 | good | 27 |
| Comparative Example 1 | 0.0033 | 0 | 2.25 | 0.08 | 0.58 | 3.87 | 0.14 | 55.55 | good | 0.02 | poor | 100 |
| Comparative Example 2 | 0 | 0.1867 | 0.05 | 23.04 | 0.58 | 0.09 | 39.64 | 55.51 | good | 0.00 | poor | 101 |
| Comparative Example 3 | 0.0029 | 0.0469 | 2.00 | 6.17 | 0.58 | 3.44 | 10.62 | 55.50 | good | 0.01 | poor | 103 |
| Comparative Example 4 | 0.0024 | 0.0895 | 1.62 | 11.31 | 0.58 | 2.80 | 19.47 | 55.60 | good | 0.00 | poor | 106 |
| Comparative Example 5 | 0.0017 | 0.139 | 1.00 | 17.28 | 0.58 | 1.72 | 29.73 | 55.55 | good | 0.00 | poor | 103 |
| Comparative Example 6 | 0.0014 | 0.168 | 0.62 | 20.78 | 0.58 | 1.08 | 35.75 | 55.56 | good | 0 00 | poor | 101 |

(continued)

| | Stabilizer | | Calcium content | Magnesium content | Residual sulfuric acid content | [Ca/H$_2$SO$_4$] | [mg/H$_2$SO$_4$] | Acetylation degree (%) | Heat stability under net conditions | | Resistance to end-breakage | |
|---|---|---|---|---|---|---|---|---|---|---|---|---|
| | Calcium hydroxide (wt%) | Magnesium acetate (wt%) | mmol/kg | mmol/kg | mmol/kg | mole ratio | mole ratio | | good/ poor | (%) | good/ poor | Relative frequency of occurrence of end-breakage |
| Comparative Example 7 | 0.0015 | 0 | 0.67 | 0.16 | 0 58 | 1.16 | 0.28 | 55.59 | poor | 0.08 | good | 40 |
| Comparative Example 8 | 0 | 0.0067 | 0.02 | 1.32 | 0.58 | 0.04 | 2.27 | 55 60 | poor | 0.08 | good | 26 |
| Comparative Example 9 | 0 | 0 | 0 02 | 0.16 | 0.58 | 0.04 | 0.28 | 55.56 | poor | 014 | good | 15 |

**Claims**

1. Cellulose acetate satisfying the following formula (1):

$$[Mg/H_2SO_4] > 0, [Ca/H_2SO_4] > 0,$$

   and

$$2.70 - [Mg/H_2SO_4])/1.62 \leq [Ca/H_2SO_4] \leq (37.7 - [Mg/H_2SO_4])/10.3 \quad\quad (1),$$

   wherein the formula (1) represents a relationship between a chemical equivalent ratio of calcium content to residual sulfuric acid content $[Ca/H_2SO_4]$ and a chemical equivalent ratio of magnesium content to residual sulfuric acid content $[Mg/H_2SO_4]$.

2. The cellulose acetate according to claim 1, wherein the chemical equivalent ratio of calcium content to residual sulfuric acid content $[Ca/H_2SO_4]$ and the chemical equivalent ratio of magnesium content to residual sulfuric acid content $[Mg/H_2SO_4]$ satisfy a relationship represented by the following formula (2), and an acetylation degree of the cellulose acetate is 54.0% or more but 56.0% or less:

$$Ca/H_2SO_4 > 0, [Mg/H_2SO_4] > 0,$$

   and

$$Mg/H_2SO_4] \geq (-1.78)[Ca/H_2SO_4] + 4.10 \quad\quad (2)$$

3. The cellulose acetate according to claim 1 or 2, wherein the chemical equivalent ratio of calcium content to residual sulfuric acid content $[Ca/H_2SO_4]$ and the chemical equivalent ratio of magnesium content to residual sulfuric acid content $[Mg/H_2SO_4]$ satisfy a relationship represented by the following formula (3):

$$Ca/H_2SO_4 > 0, [Mg/H_2SO_4] > 0,$$

   and

$$Mg/H_2SO_4] \leq (-9.59)[Ca/H_2SO_4] + 29.8 \quad\quad (3)$$

Fig. 1

## INTERNATIONAL SEARCH REPORT

| International application No. |
|---|
| PCT/JP2016/001481 |

### A. CLASSIFICATION OF SUBJECT MATTER
C08B3/06(2006.01)i

According to International Patent Classification (IPC) or to both national classification and IPC

### B. FIELDS SEARCHED

Minimum documentation searched (classification system followed by classification symbols)
C08B3/06

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)
JSTPlus/JMEDPlus/JST7580(JDreamIII), CAplus/REGISTRY(STN)

### C. DOCUMENTS CONSIDERED TO BE RELEVANT

| Category* | Citation of document, with indication, where appropriate, of the relevant passages | Relevant to claim No. |
|---|---|---|
| A | WO 2004/076490 A1 (Daicel Chemical Industries, Ltd.), 10 September 2004 (10.09.2004), a whole article & JP 4435086 B & US 2006/0142559 A1 & EP 1619209 A1 & KR 10-2005-0102127 A & KR 10-1057509 B1 | 1-3 |
| A | JP 2009-161701 A (Daicel Chemical Industries, Ltd.), 23 July 2009 (23.07.2009), a whole article (Family: none) | 1-3 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 May 2016 (09.05.16) | 17 May 2016 (17.05.16) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

| International application No. |
| --- |
| PCT/JP2016/001481 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2005-82744 A (Daicel Chemical Industries, Ltd.), 31 March 2005 (31.03.2005), a whole article (Family: none) | 1-3 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10298823 A

- JP H2251607 A


**Non-patent literature cited in the description**

- **MIGITA et al.** Wood Chemistry. KYORITSU SHUP-PAN CO.LTD, 1968, vol. 1, 180-190